Europäisches Patentamt

**European Patent Office**

Office européen des brevets

(19)

(11) Numéro de publication: **0 061 964**

**A1**

(12)

# DEMANDE DE BREVET EUROPEEN

(21) Numéro de dépôt: **82400512.8**

(22) Date de dépôt: **22.03.82**

(51) Int. Cl.³: **F 16 K 13/06**

(30) Priorité: **30.03.81 FR 8106295**

(43) Date de publication de la demande:
**06.10.82 Bulletin 82/40**

(84) Etats contractants désignés:
**AT BE CH DE GB IT LI LU NL SE**

(71) Demandeur: **COMPAGNIE CENTRALE SICLI (Société Anonyme)**
**2/4, rue Blaise Pascal**
**F-93152 Le Blanc-Mesnil(FR)**

(72) Inventeur: **Laigle, Jean**
**28, Rue des Abricotiers**
**F-93700 Drancy(FR)**

(72) Inventeur: **Voisembert, Sylvie**
**18, Avenue de la Résistance**
**F-93100 Montreuil(FR)**

(74) Mandataire: **Laget, Jean-Loup et al,**
**Cabinet Pierre Loyer 18, Rue de Mogador**
**F-75009 Paris(FR)**

(54) **Vanne en tout ou rien à déclenchement pyrotechnique.**

(57) L'invention concerne une vanne en tout ou rien à déclenchement pyrotechnique dont le conduit ou orifice d'entrée est branché sur un circuit ou un réservoir de fluide sous pression.

Cette vanne est remarquable en ce qu'elle comporte une chambre de pression (8, 25) qui communique avec le fluide sous pression et une chambre d'explosion (6) séparée de ladite chambre de pression par un opercule destructible (11) et qui est pourvue d'un orifice d'échappement (4) et d'une cartouche pyrotechnique (7) disposée à distance dudit opercule en dégageant l'orifice d'échappement tandis qu'un moyen d'allumage de ladite cartouche est prévu de telle sorte que l'explosion de cette dernière entraîne la destruction de l'opercule par propagation d'énergie dans la chambre d'explosion, ouvrant ainsi la communication entre les chambres de pression et d'explosion.

La chambre de pression est branchée sur le réservoir soit directement soit par l'intermédiaire d'un piston 19 coulissant entre une position de fermeture et une position d'ouverture.

Fig.2

- 1 -

VANNE EN TOUT OU RIEN A DECLENCHEMENT PYROTECHNIQUE

L'invention concerne une vanne en tout ou rien à déclenchement pyrotechnique, notamment destinée aux installations fixes et aux dispositifs mobiles d'extinction d'incendie.

Les installations ou dispositifs de protection, contre l'incendie comportent un réservoir de fluide extincteur sous pression sur lequel est branchée l'entrée d'une vanne dont la sortie est reliée à un circuit ou un moyen de distribution.

Les vannes connues sont déclenchées par divers moyens mécanique, électrique, pneumatique ou pyrotechnique qui sont éventuellement commandés, dans les installations fixes, de manière automatique, par un dispositif de détection, ou par des déclencheurs manuels.

L'invention propose une vanne particulièrement simple, à déclenchement pyrotechnique qui est destinée notamment, mais non exclusivement, à équiper de tels installations ou dispositifs.

Une vanne selon l'invention est remarquable en ce qu'elle comporte une chambre de pression qui communique avec le fluide sous pression et une chambre d'explosion séparée de ladite chambre de pression par un opercule destructible et qui est pourvue d'un orifice d'échappement et d'une cartouche pyrotechnique disposée à distance dudit opercule en dégageant l'orifice d'échappement tandis qu'un moyen d'allumage de ladite cartouche est prévu de telle sorte que l'explosion de cette dernière entraîne la destruction de l'opercule par propagation d'énergie dans la chambre d'explosion, ouvrant ainsi la communication entre les chambres de pression et d'explosion.

Avantageusement dans ce cas la vanne comprend une pièce munie d'un alésage longitudinal, fermé à une extrémité par un bouchon dans lequel est disposée la cartouche pyrotechnique et à son autre extrémité par l'opercule tandis que l'orifice d'échappement est percé latéralement à ladite pièce et débouche dans la chambre d'explosion formée entre la cartouche et l'opercule, la chambre de pression étant ménagée du côté de l'opercule opposé à ladite chambre de pression.

Selon un mode de réalisation particulièrement simple, la chambre de pression communique directement avec le fluide sous pression, et l'orifice d'échappement présente une section suffisante pour servir l'orifice de sortie, la destruction de l'opercule libérant le passage du fluide vers ledit orifice via la chambre d'explosion.

Une vanne d'un type connu est munie d'un clapet différentiel qui peut coulisser de manière étanche entre une position d'ouverture et une position de repos dans laquelle il obture la communication entre les orifice d'entrée et de sortie de la vanne et qui est obtenue par la pression du fluide qui s'exerce sur des surfaces différentes de part et d'autre dudit clapet, la plus petite surface étant tournée vers le conduit ou orifice d'entrée.

Un mode de réalisation selon l'invention du type sus-mentionné est remarquable en ce que la face du clapet opposée à celle tournée vers le conduit ou orifice d'entrée délimite en partie la chambre de pression de telle sorte que la destruction de l'opercule par la cartouche pyrotechnique entraîne une perte de charge dans la chambre de pression et un mouvement du clapet vers sa position d'ouverture.

Dans ce cas et pour une vanne munie de la pièce sus-mentionnée pourvue de la cartouche et de l'opercule, l'invention propose un mode préféré de réalisation dans lequel le clapet est un piston muni d'un conduit calibré et qui est monté de manière coulissante et étanche dans l'alésage d'un corps dans lequel débouche un orifice latérale de sortie et un conduit longitudinal d'entrée muni d'un siège sur lequel repose le piston au repos, de manière à obturer dans cette position ledit conduit et, par sa paroi latérale, l'orifice de sortie, tandis que la pièce munie de l'opercule
et de la cartouche pyrotechnique est vissée dans ledit corps à
distance du piston quand celui-ci est au repos pour former la
chambre de pression et laisser une place suffisante pour le coulissement dudit piston vers sa position d'ouverture.

Il est clair que la cartouche pyrotechnique détruit directement
par explosion l'opercule afin d'obtenir l'ouverture de la vanne
soit par mise en communication directe de son entrée et de sa sortie, soit en créant une chute brusque de pression d'un côté d'un
clapet coulissant.

Il n'y a donc aucune pièce en mouvement dans le dispositif de déclenchement pyrotechnique selon l'invention, l'opercule étant
détruit sans intermédiaire par l'énergie propagée dans la chambre
d'explosion.

L'invention sera mieux comprise à la lecture de la description qui
va suivre et qui se réfère au dessin annexé dans lequel :

La figure 1 est une coupe axiale d'un premier mode de réalisation
particulièrement simple ;

La figure 2 est une coupe axiale d'un second mode de réalisation
muni d'un clapet différentiel.

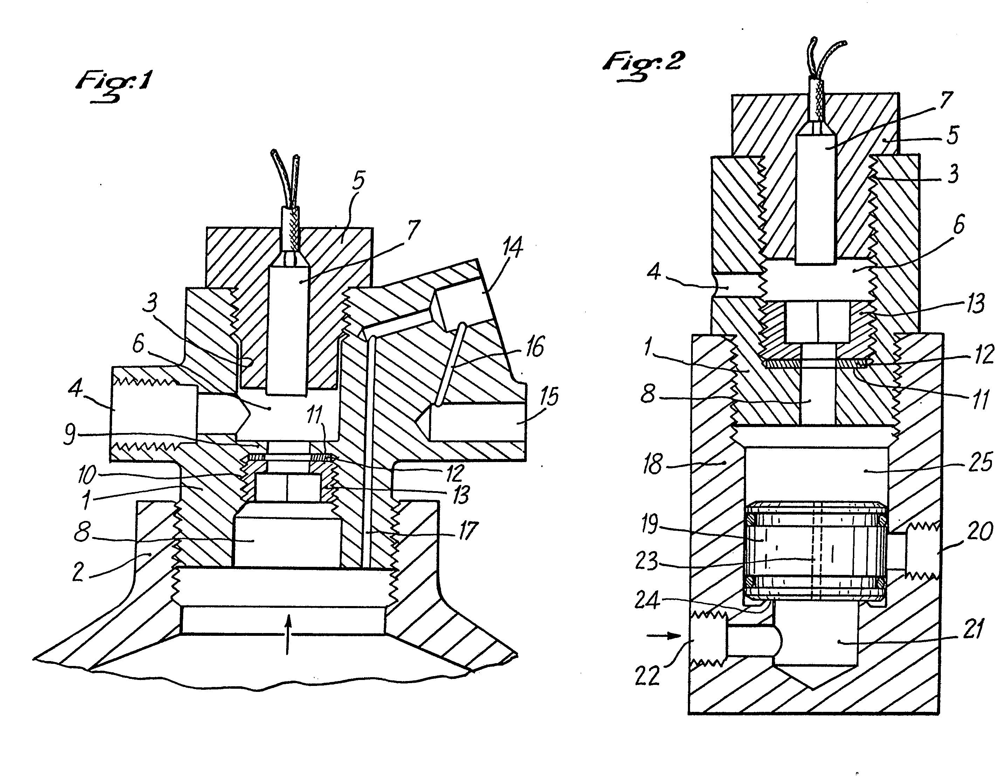

La figure 1 montre une vanne qui comporte une pièce 1 vissée dans
un réservoir de fluide sous pression schématisé en partie en 2.

La pièce 1 est pourvue d'un alésage longitudinal 3 et d'un orifice
latéral 4 d'échappement débouchant dans ledit alésage.

L'alésage 3 est fermé par un bouchon 5 vissé dans celui-ci en ménageant un espace dénommé ci-après chambre d'explosion 6, dans
laquelle débouche l'orifice 4.

Le bouchon 5 est pourvu d'un logement qui s'ouvre dans la chambre
d'explosion 6 et dans lequel est disposée une cartouche pyrotechnique 7.

La chambre d'explosion 6 peut communiquer avec le réservoir 2 par un conduit 8 qui est muni d'une saillie annulaire interne 9 et d'un filetage intérieur 10.

Sur la saillie annulaire 9, du côté tourné vers le réservoir est disposé un opercule destructible 11 fixé au moyen d'une rondelle 12 et d'une vis 13 percée en son milieu et qui coopère avec le filetage 10.

L'opercule 11 est destiné à séparer de manière étanche la chambre d'explosion 6 et le conduit 8 qui forme une chambre de pression.

Dans la pièce 1 sont également aménagés deux orifices 14 et 15 qui communiquent entre eux et avec le réservoir 2 par des conduits respectivement 16 et 17. Les orifices 14 et 15 sont par exemple destinés à servir pour l'un de prise pour un manomètre de vérification et pour l'autre d'orifice de remplissage, au moins ce dernier étant alors pourvu d'une soupape.

Pour obtenir l'ouverture de la vanne décrite ci-avant, il suffit de mettre à feu la cartouche 7 par tout moyen approprié (non représenté), par exemple électrique.

L'explosion de ladite cartouche crée en effet une onde à travers la chambre 6 qui pulvérise l'opercule 11 et ouvre la communication entre le réservoir 2 et l'orifice latéral 4 qui sert alors d'orifice de sortie, vers par exemple un circuit ou un dispositif de distribution.

La figure 2 montre un autre mode de réalisation du type à clapet différentiel et commande par perte de charge.

Dans cette figure, les éléments identiques ou de même nature portent les mêmes références.

Ce mode de réalisation comporte comme précédemment une pièce 1 munie d'un alésage longitudinal 3 fermé par un bouchon 5 qui est pourvu d'une cartouche pyrotechnique 7.

La pièce 1 comporte aussi un orifice d'échappement 4 vers l'extérieur et une chambre d'explosion 6.

Une petite variante concerne la disposition de l'opercule 11 qui est également fixé par une rondelle 12 et une vis 13 percée mais ici cette dernière est vissée dans le fond de l'alésage 3 sur un épaulement interne, le conduit 8 étant alors rétréci par rapport audit alésage.

Il est évident toutefois que la structure décrite à propos de la figure 1 peut s'appliquer ici et vice versa.

Cependant, pour le mode de réalisation de la figure 2, l'orifice latéral 4 et le conduit 8 peuvent avoir des diamètres plus petits que dans le cas de la figure 1.

En effet dans cet exemple, la pièce 1 n'est pas fixée directement sur le réservoir, mais elle est vissée dans un corps 18.

Le corps 18 est muni d'un alésage longitudinal dans lequel est monté coulissant de manière étanche un piston 19. Dans ledit alésage du corps 18 débouche un orifice de sortie 20 et un conduit longitudinal 21 relié à un orifice latéral d'entrée 22 lui-même branché sur un réservoir de fluide sous pression (non représenté).

Le piston 19 est pourvu d'un conduit calibré 23 par lequel le fluide sous pression peut passer.

Dans la position de fermeture ou de repos montrée sur la figure 2, le piston 19 obture par sa paroi latérale l'orifice de sortie 20 et repose de manière étanche sur un siège 24 aménagé à la sortie du conduit longitudinal 21.

Le conduit 8 et l'espace 25, compris entre la pièce 1 et le piston, forment une chambre de pression alimentée par le conduit 23.

Le siège 24 est tel que la face du piston tournée vers le conduit 21, présente, dans sa position fermée, une surface plus petite à la pression du fluide que son autre face qui est elle soumise en entier au fluide provenant du conduit calibré 23. C'est pourquoi le piston 19 est sollicité à rester dans la position de fermeture représentée.

Si maintenant, l'opercule 11 est détruit comme il a été dit ci-avant à propos de la figure 1, la chambre de pression 8, 25 subit une brusque chute de pression due à l'échappement du fluide de ladite chambre par l'orifice 4 via la chambre d'explosion 6.

Il est clair en effet que le débit d'échappement est supérieur au débit d'alimentation de la chambre de pression par le conduit 23.

C'est pourquoi le piston 19 est alors propulsé dans l'alésage longitudinal du corps 18 jusqu'à venir buter sur la pièce 1, position dans laquelle il dégage l'orifice de sortie 20 qui se trouve ainsi en communication avec le conduit 21 et donc avec l'orifice d'entrée 22.

Cette opération est d'autant plus rapide que c'est toute la surface du piston côté entrée qui est soumise à la pression du fluide dès le décollement dudit piston de son siège 24.

Sa remise en état après fonctionnement est simple pour les deux modes décrits et découle naturellement des dessins et de la description qui précède.

Les modes de réalisation décrits ne sont nullement limitatifs et de nombreuses variantes peuvent être imaginées sans sortir du cadre de l'invention.

C'est ainsi par exemple que le conduit 23 de la figure 2 peut être excentré par rapport à l'axe du piston 19 ou même dérivé dans le corps 18 de manière à être obturé par le piston lui-même lorsqu' il est en position d'ouverture.

Par exemple aussi le mode de réalisation de la figure 2 peut avoir un conduit 21 qui débouche directement dans le réservoir disposé à cet effet comme sur la figure 1.

En outre, si cette vanne est plus particulièrement destinée aux installations fixes ou aux dispositifs mobiles d'extinction d'incendie, il est bien sûr possible de l'utiliser à d'autres fins.

REVENDICATIONS

1. Vanne en tout ou rien à déclenchement pyrotechnique dont le conduit ou orifice d'entrée est branché sur un circuit ou un réservoir de fluide sous pression, comportant une chambre de pression qui communique avec le fluide sous pression et une chambre d'explosion séparée de ladite chambre de pression par un opercule destructible et qui est pourvue d'un orifice d'échappement et d'une cartouche pyrotechnique disposée à distance dudit opercule, l'explosion de la cartouche ouvrant la communication entre les chambres de pression et d'explosion, caractérisée en ce qu'elle comprend une pièce (1) munie d'un alésage (3) longitudinal, fermé à une extrémité par un bouchon (5) dans lequel est disposée la cartouche pyrotechnique (7) et à son autre extrémité par l'opercule (11) tandis que l'orifice d'échapement (4) est percé latéralement à ladite pièce et débouche dans la chambre d'explosion (6) formée entre la cartouche et l'opercule.

2. Vanne selon la revendication 1 munie d'un clapet différentiel (19) qui peut coulisser de manière étanche entre une position d'ouverture et une position de repos dans laquelle il obture la communication entre les orifices d'entrée (22) et de sortie (20) de la vanne et qui est obtenue par la pression du fluide qui s'exerce sur des surfaces différentes de part et d'autre dudit clapet, la plus petite surface étant tournée vers le conduit ou orifice d'entrée, caractérisée en ce que la face du clapet opposée à celle tournée vers le conduit ou orifice d'entrée délimite en partie la chambre de pression (8,25) de telle sorte que la destruction de l'opercule (11) par la cartouche pyrotechnique entraîne une perte de charge dans la chambre de pression et un mouvement du clapet vers sa position d'ouverture.

3. Vanne selon l'ensemble des revendications 1 et 2, caractérisée en ce que le clapet est un piston (19) muni d'un conduit calibré (23) et qui est monté de manière coulissante et étanche dans l'alésage d'un corps (18) dans lequel débouche un orifice latéral de sortie (20) et un conduit longitudinal (21) d'entrée munie d'un siège (24) sur lequel repose le piston au repos, de manière à obturer dans cette position ledit conduit et, par sa paroi latérale, l'orifice de sortie, tandis que la pièce (1) munie de l'opercule

**0061964**

(11) et de la cartouche pyrotechnique (7) est vissée dans ledit corps à distance du piston quand celui-ci est au repos pour former la chambre de pression et laisser une place suffisante pour le coulissement dudit piston vers sa position d'ouverture.

Fig.1

Fig.2

**0061964**

Numéro de la demande

### Office européen des brevets

## RAPPORT DE RECHERCHE EUROPEENNE

EP 82 40 0512

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | US - A - 3 413 992 (YAHLE) | | |
| A | US - A - 3 648 715 (BOOTHE) | | F 16. K 13/06 |
| A | GB - A - 985 651 (GRAVINER) | | |
| | ---- | | |

| | | | DOMAINES TECHNIQUES RECHERCHES (Int. Cl. ³) |
|---|---|---|---|
| | | | F 16 K<br>A 62 C |

Le présent rapport de recherche a été établi pour toutes les revendications

| Lieu de la recherche | Date d'achèvement de la recherche | Examinateur |
|---|---|---|
| La Haye | 30-06-1982 | VERELST |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82